# EUROPEAN PATENT APPLICATION

(11) **EP 4 468 120 A1**
(43) Date of publication of application: **27.11.2024**
(21) Application number: 23175143.9
(22) Date of filing: 24.05.2023
(51) Int. Cl.: G06F 3/01

(54) **SYSTEM, METHOD, AND COMPUTER PROGRAM FOR CONTROLLING A USER INTERFACE**

(71) Applicant: Leica Instruments (Singapore) Pte. Ltd., Singapore 608924 (SG)
(72) Inventor: THEMELIS, George, 88131 Lindau (DE)
(74) Representative: 2SPL Patentanwälte PartG mbB

(57) **Abstract**

Examples relate to a system, to a method and to a computer program for controlling a user interface. The system is configured to determine a position of a first point of reference based on a position of a first point on the body of a user for a first point of time and a second point of time. The system is configured to determine a position of a second point of reference based on a position of a pointing indicator used by the user for the first point of time and the second point of time. The system is configured to determine a first device based on the first point of reference and the second point of reference for the first point of time and a second device based on the first point of reference and the second point of reference for the second point of time. The system is configured to determine a response based on the determined first and second device. The act of determining a response comprises controlling the second device to display information provided by the first device.

## Description

### Technical field

Examples relate to a system, to a method and to a computer program for controlling a user interface.

### Background

Gesture-based input refers to a way of interacting with a computer, mobile device, or any other electronic device through the use of gestures or movements made by the user's body. These gestures are captured by built-in sensors, such as cameras or depth sensors, and are translated into commands that the device understands. Examples of gesture-based input include swiping, pinching, tapping, shaking, or tilting a device to navigate through applications, adjust settings, or perform specific actions. Gesture-based input is becoming more and more common because it is a natural and intuitive way of interacting with technology, and it allows for hands-free or touch-free control, making it useful for people with physical disabilities.

Modern working environments and living spaces are equipped with multiple devices with screens. For example, the internet of things (IoT) is a concept that allows devices to be connected. Moreover, the smart home is a generic platform term that aims to interconnect devices. However, in terms of the perception of information, this creates a fragmented information feed requiring the user to look at multiple screens. In the context of surgical devices, there are multiple concepts for surgical room vision, which all include a surgical ecosystem that interconnects multiple devices and allows information fusion and display concentrated on a single screen or set of screens. However, current implementations of interconnected devices use a cumbersome user interface (UI) and user experience (UX), and as a result, they are usually used in a semi-static configuration, i.e., they are set up once or seldomly as it takes time to reconfigure.

There may be a desire for providing an improved concept for controlling a fleet of devices providing information, for example in a surgical scenario.

### Summary

This desire is addressed by the subject-matter of the independent claims.

Various example of the present disclosure are based on the finding that humans, naturally, perceive and understand a physical set of devices in terms of their spatial arrangement. This is typically not reflected in the configuration user interface in surgical ecosystems, and thus the configuration of the display of information of different devices of the surgical ecosystem is usually cumbersome. In the present concept, this is addressed by enabling a contactless control about the transfer of information to be displayed between devices, starting by pointing at a device and dragging and dropping the desired information to a target device. This is done from the point of view of the user - the system detects where the user is pointing at from the user's point of view, and thus determines the information to be displayed and the target device where the information is to be displayed. This enables a more intuitive control of which information is to be displayed at which device, such that the configuration can be changed ad-hoc without requiring complex thought by the user. This can improve the safety during complex procedures, such as surgical procedures, where the surgeon is unable to spare thought for reconfiguring the information being displayed, while benefitting from the possibility of changing the configuration in an ad-hoc manner.

Some aspects of the present disclosure relate to a system for controlling a user interface. The system comprises one or more processors. The system is configured to determine a position of a first point of reference based on a position of a first point on the body of a user for a first point of time and a second point of time. The system is configured to determine a position of a second point of reference based on a position of a pointing indicator used by the user for the first point of time and the second point of time. The system is configured to determine a first device based on the first point of reference and the second point of reference for the first point of time and a second device based on the first point of reference and the second point of reference for the second point of time. The system is configured to determine a response based on the determined first and second device. The act of determining a response comprises controlling the second device to display information provided by the first device. By determining the first and second device based on the respective first and second points of reference, the user can select at the respective devices from his point of view, which is intuitive. Moreover, selecting the devices by pointing at them is more intuitive than using a configuration menu for this purpose. Therefore, a more intuitive approach for controlling the distribution of information in a multi-device setting is provided, which can improve safety in critical scenarios, such as during surgery, while providing a benefit by the user having desired information at their fingertips.

For example, the second point of time may be later than the first point of time. In other words, the gesture being performed by the user may involve first pointing at the first device and then pointing at the second device.

In some examples, pointing at the first and second device may be part of a gesture being performed by the suer. For example, the system may be configured to identify a pre-defined gesture being performed by the user, and to determine the first and second point in time based on the pre-defined hand-gesture. For example, the pre-defined gesture may include pointing at the first device at the first point in time and pointing at the second device at the second point in time. By using a pre-defined gesture, the system can deduce, from the gesture alone, that the user desires to transfer information to another device. Moreover, the first point of time and the second point of time can be determined based on the pre-defined gesture.

Figuratively speaking, the user picks up information at the first device and drops the information at the second device. Accordingly, the pre-defined gesture may be a drag-and-drop gesture. Using a drag and drop gesture may be intuitive for the purpose of transferring information from one device to another.

In general, the proposed concept's implementation is facilitated if the devices are interconnected, such that the respective information can be provided by the first device to the second device via a network connection. In this case, the system may be configured to obtain the information provided by the first device from the first device. The system may be further configured to provide the information provided by the first device to the second device, for displaying on the second device.

However, in some cases, it is useful if legacy devices that cannot provide their information via a network can also be integrated. In this case, the information provided by the first device may be obtained externally, e.g., via a camera sensor. For example, the system may be configured to obtain imaging sensor data showing the information provided by the first device from a camera being separate from the first device, the imaging sensor data comprising the information provided by the first device. This enables integration of legacy devices.

For example, the imaging sensor data may comprise a representation of information shown on a screen of the first device. This representation can then be processed to extract the relevant information, for display on the second device. For example, the system may be configured to extract the information by the first device from the imaging sensor data, e.g., by cropping the imaging sensor data and/or geometrically transforming the imaging sensor data. This way, the information provided by the first device can be pre-processed for displaying on the second device, resulting in an improved quality of the information displayed on the second device. The system may be further configured to provide the information extracted from the imaging sensor data to the second device, for displaying on the second device.

To show the information on the second device, the respective information may be provided to the second device. For example, the system may be configured to provide a display signal for a display device of the second device, the display signal comprising a representation of the information provided by the first device. The display signal may be shown by the display device of the second device without requiring additional processing by the second device, which reduces or minimizes a computational effort required by the second device.

There are various ways for determining the two reference points and/or the position of the devices. In various examples, the system may be configured to process at least one of depth sensor data of a depth sensor, imaging sensor data of a camera sensor and stereo imaging sensor data of a stereo camera to determine at least one of the position of the first point of reference and the position of the second point of reference, and a position of one or more devices. For example, sensors that enable determination of a 3D position of the respective points, such as the stereo imaging sensor data or the depth sensor data, may be particularly suitable for determining the position of the points of reference and/or of the devices. To improve the quality of the determination of the respective points of reference when depth sensor data is used, the depth sensor data may be used together with (co-registered) imaging sensor data.

To determine the positions of the points of reference, which are both either at the body of the person or held by the person, a skeletal model may be used. For example, the system may be configured to determine the positions of joints of a skeletal model of the body of the user by processing the respective sensor data, and to determine at least one of the position of the first point of reference and the position of the second point of reference based on the positions of the joints of the skeletal model. There are various different pre-trained machine-learning models that enable generation of a skeletal model, which may lower the implementation complexity of the system.

An aspect of the present disclosure relates to a surgical imaging system, comprising the above system and at least one of the first device and the second device.

Another aspect of the present disclosure relate to a method for controlling a user interface. The method comprises determining a position of a first point of reference based on a position of a first point on the body of a user for a first point of time and a second point of time. The method comprises determining a position of a second point of reference based on a position of a pointing indicator used by the user for the first point of time and the second point of time. The method comprises determining a first device based on the first point of reference and the second point of reference for the first point of time and a second device based on the first point of reference and the second point of reference for the second point of time. The method comprises determining a response based on the determined first and second device. The act of determining a response comprises controlling the second device to display information provided by the first device.

An aspect of the present disclosure relates to computer program with a program code for performing the above method when the computer program is run on a processor.

### Short description of the Figures

Some examples of apparatuses and/or methods will be described in the following by way of example only, and with reference to the accompanying figures, in which:

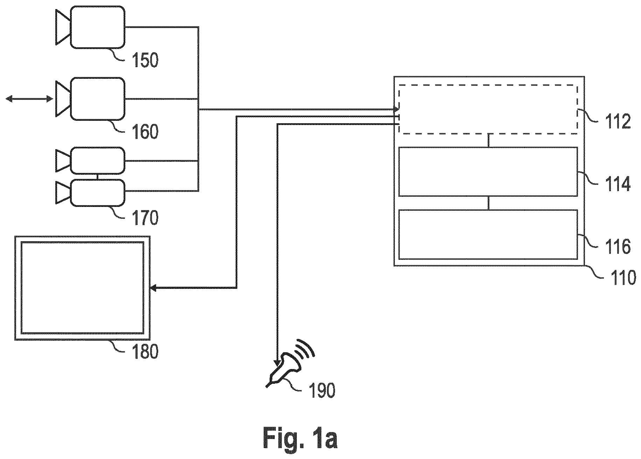

Fig. 1a shows a schematic diagram of an example of a system for controlling a user interface;

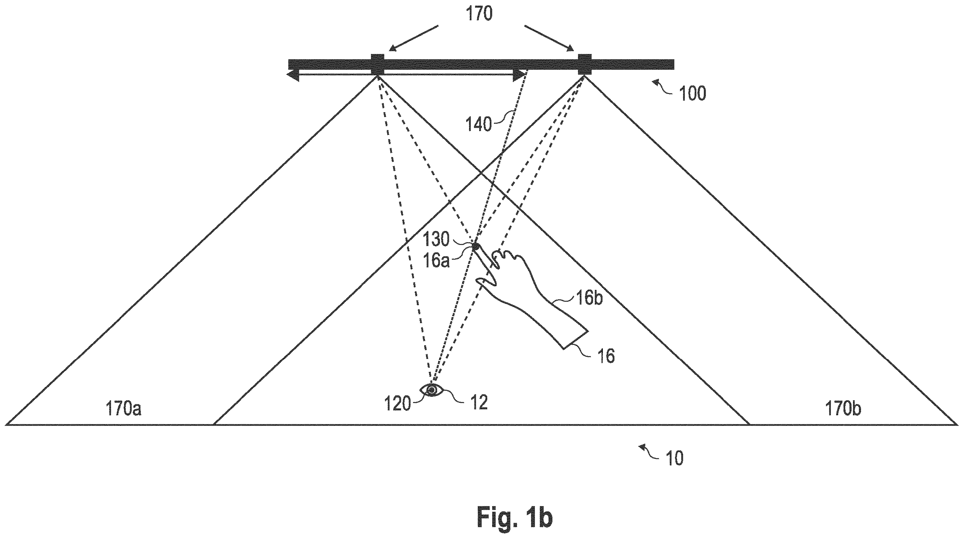

Fig. 1b shows a schematic diagram of examples of points of reference when the user interface is shown on a screen;

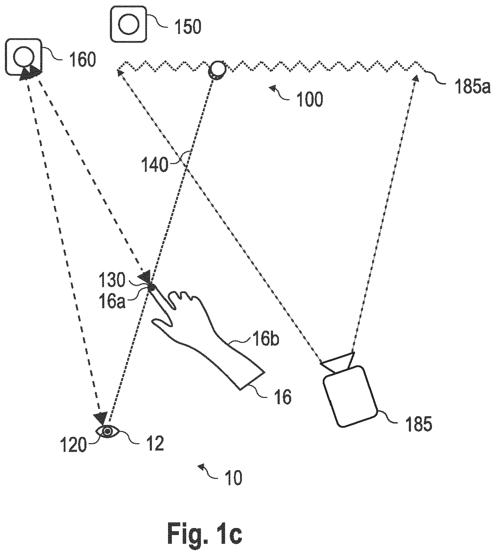

Fig. 1c shows a schematic diagram of examples of points of reference when the user interface is projected or a haptic user interface of a device;
Fig. 1dshows a schematic diagram of an example of a surgical imaging system comprising the system;
Fig. 2a shows a schematic diagram of a user dragging information from a vitals monitor to a screen of a surgical microscope system;
Fig. 2b shows a schematic diagram of a user dragging information from a screen of a surgical microscope system to a surgeon's head-mounted viewer;
Fig. 2c shows a schematic diagram of a grab gesture;
Fig. 3a shows a schematic drawing of a display device with ultrasonic emitters;
Fig. 3b shows a schematic drawing of haptic zones with different tactile feedback;
Fig. 3c shows a schematic drawing of haptic feedback while moving a microscope;
Figs. 3d and 3e show schematic drawing of haptic feedback while operating a rotational user interface element via gesture control;
Fig. 4 shows a flow chart of an example of a method for controlling a user interface; and
Fig. 5 shows a schematic diagram of a system comprising an imaging device and a computer system.

### Detailed Description

Various examples will now be described more fully with reference to the accompanying drawings in which some examples are illustrated. In the figures, the thicknesses of lines, layers and/or regions may be exaggerated for clarity.

Fig. 1a shows a schematic diagram of an example of a system 110 for controlling a user interface. In general, the system 110 may be implemented as a computer system. The system 110 comprises one or more processors 114 and, one or more interfaces 112 and/or one or more storage devices 116. The one or more processors 114 are coupled to the one or more storage devices 116 and to the one or more interfaces 112. In general, the functionality of the system 110 may be provided by the one or more processors 114, in conjunction with the one or more interfaces 112 (for exchanging data/information with one or more other components, such as a depth sensor 160, a camera sensor 150, a stereo camera 170, a display device 180, a projection device 185 and/or an emitter 190 of a contactless tactile feedback system), and with the one or more storage devices 116 (for storing information, such as machine-readable instructions of a computer program being executed by the one or more processors). In general, the functionality of the one or more processors 114 may be implemented by the one or more processors 114 executing machine-readable instructions. Accordingly, any feature ascribed to the one or more processors 114 may be defined by one or more instructions of a plurality of machine-readable instructions. The system 110 may comprise the machine-readable instructions, e.g., within the one or more storage devices 116.

In the following, the functionality of the system is illustrated with respect to Figs. 1b and 1c, in which various points of reference and the user interface are shown. The system 110 is configured to determine a position of a first point of reference 120 based on a position of a first point 12 on the body of a user 10. The system 110 is configured to determine a position of a second point of reference 130 based on a position of a pointing indicator 16 used by the user. The system 110 is configured to determine at least one of a position in the user interface, an element of the user interface and a device being accessible via the user interface based on the first point of reference and the second point of reference. The system 110 is configured to determine a response based on at least one of the determined position in the user interface, the determined element of the user interface and the determined device. In particular, the determined response may be to control the user interface based on the determined position in the user interface or element of the user interface.

Various examples of the proposed concept are based on the finding that, in order to improve the intuitiveness of controlling a user interface by pointing at it, not only the pointing indicator being used (e.g., the hand, or a pointing stick) is to be tracked, but also another point of reference, which is used, together with the pointing indicator, to establish where the user is pointing from the user's point of view. Therefore, in the proposed concept, two points of reference are determined - a first point of reference at the body of the person (e.g., at the head/face, or at the sternum), and a second point of reference at a pointing indicator used by the person (e.g., at the hand/index finger, or at a pointing device, such as a pointing stick, pen, pencil, or scalpel). Using these two points of reference, not only the relative motion of the pointing indicator can be tracked, but an extrapolation can be made to determine the position (or element or device) the user is pointing at. Therefore, the proposed concept starts with determining the first and second point of reference.

The system is configured to determine the position of the first point of reference 120 based on a position of a first point 12 on the body of the user 10. As outlined above, this first point 12 on the body of the user 10 is a point that can be used as starting point for establishing the point of view of the user. Therefore, the first point 12 may preferably a point at the head/face of the user, such as the forehead, an eye, the position between two eyes, the nose, or the chin of the user. In other words, the system may be configured to determine the first point of reference based on the position of one or both eyes 12 of the user (as shown in Figs. 1b, 1c. for example). As most humans use stereoscopic vision, the selection of an eye (or both eyes) as first point of reference may be supported by heuristics or machine-learning-based approaches to further improve the precision. As a compromise, the system may be configured to determine the first point of reference based on the position of both eyes 12 of the user (e.g., between the positions of both eyes). Alternatively, a (system) pre-defined eye or a user-defined eye (e.g., the left or right eye) may be used. In other words, the system may be configured to determine the first point of reference based on the position of a pre-defined or user-defined eye 12 of the user. Alternatively, the system may be configured to select one of the eyes based on the second point of reference, and in particular based on the proximity to the second point of reference. In other words, the system may be configured to determine the first point of reference based on a position of the eye 12 of the user being in closer proximity to the second point of reference. Alternatively, the system may be configured to determine a dominant eye of the user, e.g., by processing imaging sensor data or stereo imaging sensor data to determine whether the user occasionally only uses one eye (and closes the other) and selecting the eye that remains open as dominant eye. Alternatively, the dominant eye may be determined based on previous attempts of the user at controlling the user interface. For example, the system may be select an eye as dominant eye by initially calculating two positions (and intersecting elements) in the user interface based on two different first points of reference based on the positions of both eyes, and determining one of the eyes as dominant eye if a corresponding position in the user interface intersects with a user interface element. In other words, the system may learn which eye is dominant from inference and use this eye for future calculations. The system may be configured to determine the first point of reference based on a position of the dominant eye 12 of the user.

In addition to the first point of reference, the system is configured to determine the position of the second point of reference 130 based on the position of a pointing indicator 16 used by the user. In the present disclosure, the term "pointing indicator" is used, which can both refer to a hand or finger (preferably index finder) being used to point at the user interface and to a tool that is being used for pointing at the user interface. In other words, the pointing indicator 16 is an entity (body part or tool) being used to point at the user interface. Accordingly, the system may be configured to determine the second point of reference based on a position of a finger 16a of the hand of the user. Additionally, or alternatively, the system may be configured to determine the second point of reference based on a position of a pointing device held by the user. In many cases, both may be an option - if the user uses their hand to point at the user interface, the position of the finger may be used, if, however, the user uses a tool, such as a pen, pencil, pointing stick, scalpel, endoscope etc. that can be considered an extension of the hand, the tool may be used. For example, the system may be configured to determine whether the user is holding a pointing device (e.g., tool/object) extending the hand towards the user interface, and to select the finger of the user if the user is pointing towards the user interface without such a tool/object, and to select the pointing device if the user is pointing towards the user interface with a pointing device. For example, a machine-learning model may be trained, using supervised learning and (stereo) imaging data and/or depth sensor data and corresponding labels, to perform classification as to whether the user is holding a pointing device, and to perform the selection based on the trained machine-learning model. Alternatively, or additionally, image segmentation techniques may be used. The second point of reference may be determined accordingly, based on the position of (a tip of) the finger and based on the position of (a tip of) the pointing device.

In some examples, the user may intuitively swivel (i.e., adjust the pointing direction of) their finger (or pointing device, for that matter) to make fine corrections to the position the user is pointing at. Such swiveling motions may be taken into account too. For example, the system may be configured to determine the second point of reference based on a position of a wrist 16b and based on a position of one of an index finger 16a of the hand of the user and a pointing device held by the user. For example, the position of the second point of reference may be adjusted such, that the resulting intersection point in the user interface when an extrapolated line (in the following also denoted imaginary line) passing through the first and second point of reference up to the user interface is determined, is adjusted in line with the swiveling motion of the finger (and, in some case, disproportional to the change in position of the tip of the index finger).

To determine the respective points on the body (e.g., head, sternum), hand or pointing device, sensor data may be processed. For example, as shown in Fig. 1a, the system may be configured to obtain sensor data from one or more of a depth sensor 160, a camera sensor 150 (which may be combined with the depth sensor 160 to provide RGB-D (Red, Green, Blue-Depth) sensor data) and a stereo camera 170 (i.e., two camera sensors forming a stereo pair), and to determine the positions on the body, hand and/or pointing device based on the respective sensor data. In other words, the system may be configured to process at least one of depth sensor data of a depth sensor 160, imaging sensor data of a camera sensor 150, combined RGB-D sensor data of a combined depth sensor and camera sensor, and stereo imaging sensor data of a stereo camera 170 to determine at least one of the position of the first point of reference and the position of the second point of reference.

As both points of reference are at least related to parts of the body of the user (with the first point of reference being on the body, and the second point of reference being part of the hand or held by a hand of the user), three-dimensional (human) pose estimation may be applied on the respective sensor data to determine the respective points of reference. There are various algorithms and machine-learning-based approaches for generating three-dimensional pose-estimation data from two- and three-dimensional video data. They usually include generation of a three-dimensional skeletal model of the user based on the respective sensor data. Accordingly, the system may be configured to determine the positions of joints of a (three-dimensional) skeletal model of the body of the user by processing the respective sensor data. In the context of the present disclosure, the term "skeletal model" might not be understood in a biological sense. Instead, the skeletal model may refer to a pose-estimation skeleton, which is merely modeled after a "biological" skeleton. Thus, the generated three-dimensional pose-estimation data may be defined by a position of joints of a skeleton in a three-dimensional coordinate system, with the joints of the one or more skeletons being interconnected by limbs. Similar to above, the terms "joints" and "limbs" might not be used in their strict biological sense, but with reference to the pose-estimation skeleton referred to in the context of the present disclosure. Such a skeletal model may be generated using the respective sensor data specified above. Accordingly, the system may be configured to process at least one of the depth sensor data, the imaging sensor data, the combined RGB-D sensor data, and the stereo imaging sensor data to determine the skeletal model of the user. For example, machine-learning algorithms and machine-learning models that are known from literature or that are available off the shelf may be used for this purpose. Examples of such algorithms and models are given in the following. For example, Mehta et al: "vNect: Real-time 3D Human Pose Estimation with a Single RGB Camera" (2017) provide a machine-learning based three-dimensional pose estimation algorithm for generating a three-dimensional skeletal model from imaging data. Zhang et al: "Deep Learning Methods for 3D Human Pose Estimation under Different Supervision Paradigms: A Survey" (2021) provide a machine-learning based three-dimensional pose estimation algorithm for generating a three-dimensional skeletal model from RGB-D data. Lallemand et al: "Human Pose Estimation in Stereo Images" provide a machine-learning based three-dimensional pose estimation algorithm for generating a three-dimensional skeletal model from stereo imaging sensor data. Alternatively, an application-specific machine-learning model may be trained, in line with the approaches listed above.

The resulting skeletal model may now be used to determine the points of reference. In other words, the system may be configured to determine at least one of the position of the first point of reference and the position of the second point of reference based on the positions of the joints of the skeletal model. For example, the skeletal model may include, as joints, one or more of the position of the eyes of the user, the position of the forehead of the user, the position of the tip of the nose of the user, the position of the wrists of the user, the position of the tips of the (index) fingers of the user. In addition, the skeletal model may include an additional point representing the tip of a pointing device being held by the user. For example, the machine-learning model may be trained to include such an additional point in the skeletal model. Alternatively, the system may be configured to determine whether the user is using a pointing device to point at the user interface, to determine a position of the tip of the pointing device relative to a point on the hand of the user (based on the skeletal model and based on the respective sensor data), and to add a joint representing the tip of the pointing device to the skeletal model. For example, another machine-learning model may be trained to output the position of the tip of the pointing device relative to a point on the hand of the user, e.g., using supervised learning. For example, such a machine-learning model may be trained as regressor, using a skeletal model and the respective sensor data as input, and the relative position as desired output.

The first and second point of reference are now used to determine at least one of a position in the user interface, an element of the user interface and a device being accessible via the user interface. For this purpose, the system may be configured to determine the position in the user interface, the element of the user interface or the device by projecting an imaginary line 140 through the first point of reference and the second point of reference towards the user interface. The position in the user interface may correspond to the point where the imaginary line intersects the user interface. The element of the user interface may correspond to an element of the user interface that overlaps with the point in the user interface. The device may correspond to a device that is intersected by the imaginary line. However, the proposed concept is not limited to using a geometric approach that is based on projecting an imaginary line. Instead, a look-up table may be used to determine the position, element and/or device, or a machine-learning model may be trained to output the position, from which the element or device can be determined (similar to the case where an imaginary line is used). In this case, supervised learning may be used to train such a machine-learning model, using coordinates of the first and/or second point of reference, and optionally coordinates of the user interface, as training input and information on a position in the user interface as desired output.

In the present context, various positions are used, such as the point on the body/first point of reference, the second point of reference, the position in the user interface etc. These positions may be defined in a (or several) coordinate systems. For example, the first and second point of reference may be defined in a world coordinate system. If the coordinates of the user interface are known, e.g., also defined in the world coordinate system (which may be defined relative to the user interface), the imaginary line can be projected through the first and second points of reference towards the user interface, and the point of in the user interface (and element intersecting with the point) can be determined based on the point of intersection of the imaginary line. If another technique is used, such as a look-up table or trained machine-learning model, similarly, a world coordinate system or two separate coordinate systems may be used for the points of reference and the user interface. It is to be noted, that the user interface is not necessarily limited to being a two-dimensional user interface or a user interface that is being shown on a display device - in some examples, as will become clear in connection with Figs. 1b and 1c, the user interface may be a three-dimensional user interface, which may be either a real-world user interface with haptic/tactile input modalities, or a three-dimensional user interface being shown on a 3D display, a three-dimensional projection or a hologram.

The system is configured to determine a response based on the determined position in the user interface, the determined element of the user interface and/or the determined device. Such a response may be used to determine, based on the position or movement of the position in the user interface, whether the user is trying to interact with, and thus control, the user interface, or whether the user is not engaged with the user interface. In the latter case, the determined position and/or element of the user interface may be used to control the user interface. In other words, the system may be configured to control the user interface based on the determined position in the user interface or element of the user interface. In this context, the "element" may be a user interface element, such as a button, a label, a dropdown menu, a radio button, a checkbox, a rotational input, or a slider of a virtual user interface (being displayed on a screen or projected), or a button, a label, a radio button, a rotational knob, or a slider of a haptic/tactile "real-world" user interface (that is arranged, as dedicated input modalities, at a device).

To control the user interface, hand gestures may be used. For example, the system may be configured to identify a hand gesture being performed by the user, and to control the user interface based on the determined element and based on the identified hand gesture. For example, the system may be configured to process the sensor data, using a machine-learning model, to determine the hand gesture being used. Such a machine-learning model may be trained, using supervised learning, as a classifier, using the respective sensor data as input data and a classification of the gesture as desired output. For example, examples of such a machine-learning model and algorithm can be found in Bhushan et al: "An Experimental Analysis of Various Machine Learning Algorithms for Hand Gesture Recognition" (2022). Various hand gestures may be identified and used to control the user interface. For example, the system may be configured to identify at least one of a clicking gesture, a confirmation gesture, a rotational gesture, a pick gesture, a drop gesture, and a zoom gesture. For example, to perform the clicking gesture, the pointing indicator may be moved intentionally towards the user interface, e.g., for a pre-defined distance in at most a pre-defined time. This gesture may be used to select a user interface element. To perform the rotational gesture, the user may rotate the hand. This gesture may be used to control a rotational input or rotational knob of the user interface. To perform the pick gesture and the drop gesture, the user may first move the pointing indicator intentionally towards an element of the user interface, draw the pointing indicator back towards the body (pick gesture), and move the pointing indicator towards another position in the user interface (drop gesture). To perform the zoom gesture, the user may move the hand, with palm pointed towards the user interface, towards or away from the user interface. Alternatively, the gestures may be implemented differently, and/or used to control different elements of the user interface.

To increase the confidence of the user controlling the user interface, visual feedback may be given to the user. In particular, the system may be configured to highlight the determined position in the user interface continuously using a positional indicator 230. In a screen-based user interface (as shown in Fig. 1b) or projection-based user interface (as shown as one example in Fig. 1c), such a positional indicator may be included in the representation of the (virtual) user interface itself, e.g., overlaid over the user interface. For example, the system may be configured to generate a display signal, with the display signal comprising the user interface (e.g., and the positional indicator). The system may be configured to provide the display signal to a display device 180, such as a display screen or a head-mounted display. Alternatively, the system may be configured to generate a projection signal, which may comprise (in some cases, where the user interface itself is being projected) the user interface, and the positional indicator. The system may be configured to provide the projection signal to a projection device 185 for projecting the projection signal onto the haptic user interface. It is to be noted, that such a projection can also be used with "haptic" user interfaces (i.e., user interfaces that are arranged, as haptic input modalities, at the respective devices being controlled, without including a projection of the user interface.

To allow the user to grasp the mechanism, the positional indicator may be provided in a shape that conveys whether the system has determined the correct position or item. For example, the system may be configured to generate the positional indicator with the shape of a hand based on a shape of the hand of the user. For example, the system may be configured to compute the shape of the hand of the user based on the respective sensor data, and generate the positional indicator based on the shape of the hand of the user (or based on a simplified hand shape). In some examples, the system may be configured to generate the shape of the positional indicator such, that, form the point of view of the user, the shape of the positional indicator extends beyond the shape of the hand of the user, e.g., by "exploding" the shape by a pre-defined absolute margin, such that the user can see the shape even if the hand partially obscures the user interface. Alternatively, the system may be configured to determine the position of the positional indicator such, that, form the point of view of the user, the positional indicator is offset by a pre-defined or user-defined offset (e.g., in two dimensions).

In addition, a visual representation of the identified hand gesture may be shown, e.g., as a pictogram representation of the hand gesture or of the functionality being controlled by the hand gesture. For example, the system may be configured to display a visual representation of the identified hand gesture via a display device 180 or via a projection device 185.

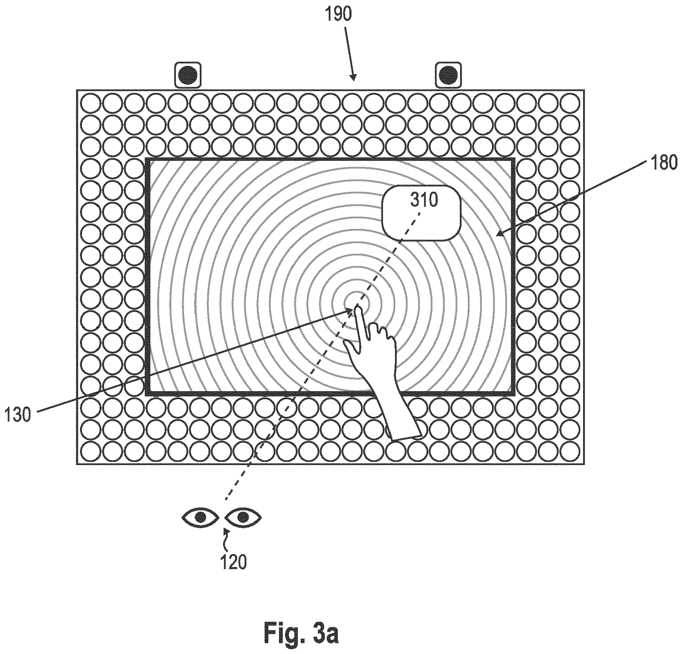

To add a tactile dimension, an emitter of a contactless tactile feedback system can be used to give tactile feedback to the user. For example, the system may be configured to control an emitter 190 of a contactless tactile feedback system based on at least one of the position in the user interface and the element of the user interface, and to provide tactile feedback to the user using the emitter according to the position in the user interface or according to the element of the user interface. For example, as discussed in connection with Figs. 3a to 3e, the emitter 190 may be one of an ultrasound emitter or array of ultrasound emitters, one or more laser emitters, one or more air emitters, or one or more magnetic field emitters. For example, when the position in the user interface intersects with an element (e.g., when the user moves the pointing indicator), tactile feedback may be given. Similarly, tactile feedback can be given when the user interface is being controlled, e.g., if a button is actuated by a clicking gesture or a rotational input/knob is rotated using a rotational gesture.

In some examples, different levels or patterns of tactile feedback may be given. for example, a first level or first pattern of tactile feedback may be given when an element of the user interface or device is selected, and a second level or second pattern of tactile feedback may be given while the user interacts with the element of the user interface or with the device. A third level or third pattern of tactile feedback may be given when the user reaches a boundary, e.g., while controlling an element of the user interface or a device via gesture control. For example, if the user controls a virtual rotational element (e.g., rotational knob) via gesture control, the third level or third pattern of tactile feedback may be provided when the rotational element is at an extreme position (e.g., lowest or highest allowed position). Similarly, if the user controls movement of a device, such as a microscope, the third level or third pattern of tactile feedback may be provided when the position of the device reaches a limit, e.g., due to stability restrictions or due to a limit of an actuator).

In the following, two example implementations are shown. In Fig. 1b, an example is shown where the user interface is displayed on a display device (such as a screen). Fig. 1b shows a schematic diagram of examples of points of reference when the user interface is shown on a screen. Fig. 1b shows a user interface 100. Two stereo cameras 170 are arranged above (or below) the user interface 100, having two partially overlapping fields of view 170a, 170b. The stereo cameras provide stereo imaging sensor data, which are used to determine the two points of reference - the first point of reference 120 at the position of an eye 12 of a user 10, and the second point of reference 130 at the position of a fingertip 16a (of the index finger) of the hand of the user. Through the first and second point of reference, an imaginary line 140 is projected, pointing at a position in the user interface 100.

In Fig. 1c, a different paradigm is used. In this case, the user interface 100 can be either a projected user interface, e.g., a user interface that is projected onto a projection surface, or the user interface can be a haptic user interface (indicated by the zig-zag shape) that is arranged at one or multiple devices being controlled by the system. Fig. 1c shows a schematic diagram of examples of points of reference when the user interface is projected or a haptic user interface of a device. In the example of Fig. 1c, a depth sensor 160 and a camera sensor 150 are used to generate RGB-D sensor data, which is processed by the system 110 to determine the first point of reference 120 and the second point of reference 130. An imaginary line 140 is projected towards the user interface. In one case, the user interface is projected by projection device 185 onto a projection surface 185a. Alternatively, only indicators might be projected onto the projection surface 185a. For example, the projection signal may comprise at least one of a positional indicator for highlighting the determined position of the haptic user interface, an indicator for highlighting the element of the haptic user interface, and a visual representation of the identified hand gesture.

As shown in one interpretation of Fig. 1c, the user interface may be a haptic, real-world user interface, as indicated by the rotational knob shown as part of the user interface 100. Alternatively, the knob may be part of the projected user interface. In the example of Fig. 1c, the position in the user interface intersects with the (real-world or projected) rotational knob, such that the rotational knob is determined as user interface element and/or such that the device comprising the rotational knob is determined as device. The rotational knob may now be controlled via a hand gesture, e.g., in the projected user interface, or by controlling the control functionality associated with the knob. In other words, if the user interface is a haptic user interface of a physical device, the determined element may be an element of the haptic user interface. Similarly, the determined device may be a device that is accessible (i.e., controllable) via the haptic user interface. In this case, the system may be configured to control a control functionality associated with the element of the haptic user interface (e.g., without turning the knob or pressing a button of the haptic user interface) and/or associated with the determined device. This way, the user can control the device or user interface element in a way that is not unlike telekinesis.

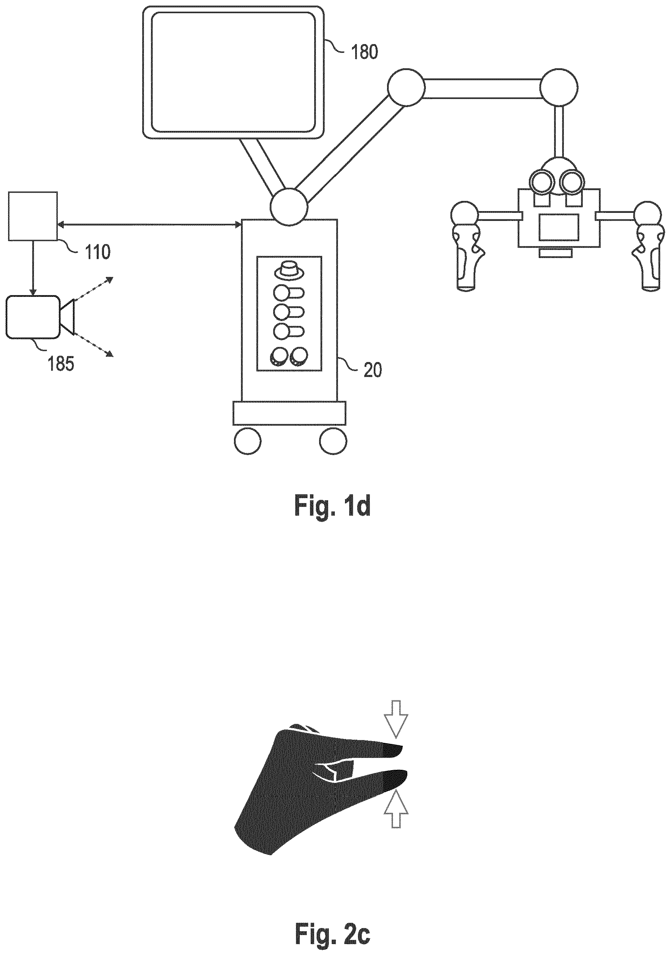

Such ways of controlling a user interface are particularly useful in scenarios, where, due to hygiene or as the user is unable to move around, a user is unable to control the user interface by touch. Such a scenario can, for example, be found in surgical theatres, where a surgeon seeks to control a surgical imaging device, such as a surgical microscope or surgical exoscope (also sometimes called an extracorporeal telescope), or other devices, such as an endoscope, an OCT (Optical Coherence Tomography) device. Exoscopes are camera-based imaging systems, and in particular camera-based 3D imaging systems, which are suitable for providing images of surgical sites with high magnification and a large depth of field. Compared to microscopes, which may be used via oculars, exoscopes are only used via display modalities, such as monitor or a head-mounted display. Such devices are usually part, or attached to, a surgical imaging system, such as a surgical microscope system or a surgical exoscope system. Thus, the system may be configured to control a user interface of the surgical microscope system (and connected devices). Fig. 1d shows a schematic diagram of an example of a surgical imaging system comprising the system 110. In the case shown in Fig. 1d, the surgical microscope system shown in Fig. 1d comprises a base unit 20 with a haptic user interface (indicated by the knobs and buttons). Using the projection device 185, the aforementioned indicators may be projected onto the haptic user interface. During surgery, the surgeon (or an assistant) may point towards the haptic user interface, e.g., the knobs and buttons, and control the control functionality associated with the different elements of the user interface using hand gestures.

In some examples, the system 110 may be an integral part of such a surgical imaging system and may be used to control various aspects of the optical imaging system 100. In particular, the system 110 may be used to process imaging data of an imaging device (e.g., the microscope or exoscope) of the optical imaging system, and to generate a display signal based on the image data. Therefore, the system 110 may also serve as an image processing system of the surgical imaging system. In addition, the system 110 may be configured to control additional aspects of the surgical imaging system, such as an illumination provided by the surgical imaging system, a placement of the imaging device relative to a surgical site being imaged, or one or more auxiliary surgical devices being controlled via the surgical imaging device.

A surgical imaging system is an optical imaging system 100 that comprises a (surgical) imaging device, such as a digital stereo microscope, an exoscope or an endoscope, as imaging device. However, the proposed concept is not limited to such embodiments. For example, the imaging device is often also called the "optics carrier" of the surgical imaging system.

The one or more interfaces 112 of the system 110 may correspond to one or more inputs and/or outputs for receiving and/or transmitting information, which may be in digital (bit) values according to a specified code, within a module, between modules or between modules of different entities. For example, the one or more interfaces 112 may comprise interface circuitry configured to receive and/or transmit information. The one or more processors 114 of the system 110 may be implemented using one or more processing units, one or more processing devices, any means for processing, such as a processor, a computer or a programmable hardware component being operable with accordingly adapted software. In other words, the described function of the one or more processors 114 may as well be implemented in software, which is then executed on one or more programmable hardware components. Such hardware components may comprise a general-purpose processor, a Digital Signal Processor (DSP), a micro-controller, etc. The one or more storage devices 116 of the system 110 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

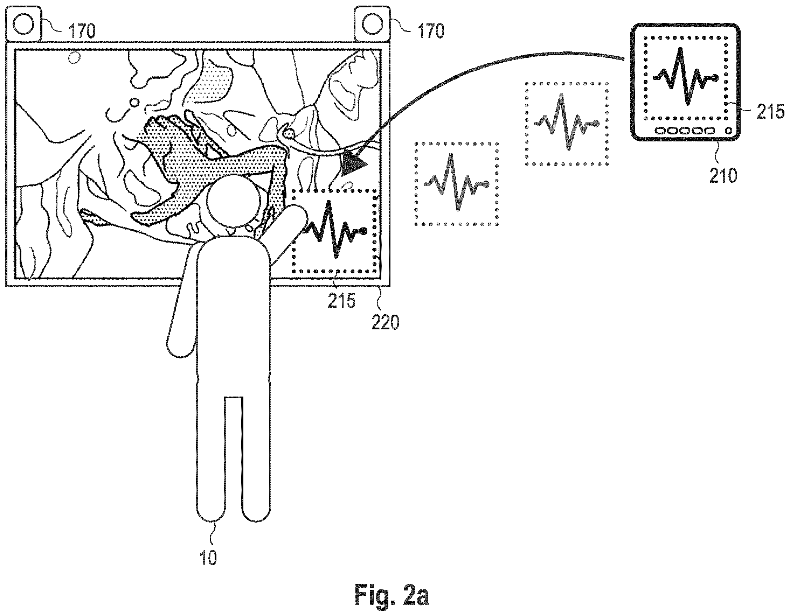

More details and aspects of the system are mentioned in connection with the proposed concept, or one or more examples described above or below (e.g., Fig. 2a to 5). The system may comprise one or more additional optional features corresponding to one or more aspects of the proposed concept, or one or more examples described above or below.

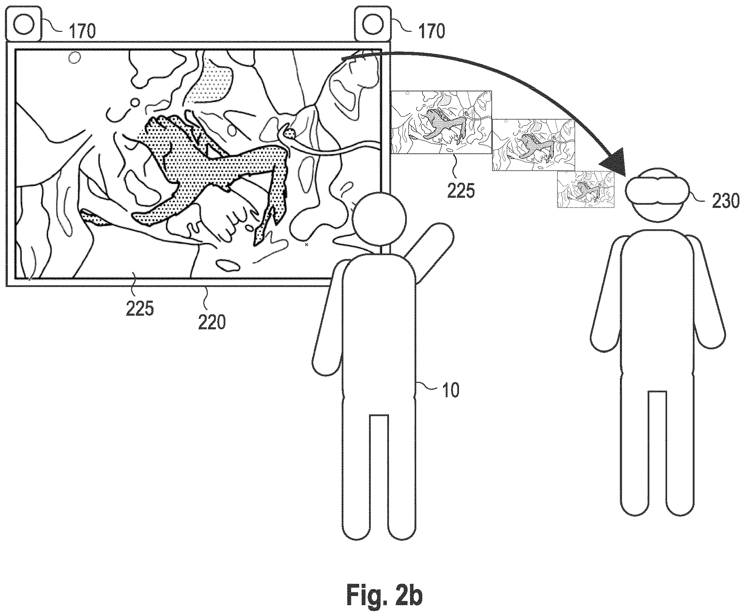

In the following, an application of the concept shown in Figs. 1a to 1d, is shown, in which the concept is used to transfer information between devices of an ecosystem of devices, thereby creating a contactless ecosystem, with contactless collective control of an ecosystem of devices. Using contactless control, an intelligent way to control an ecosystem of connected devices is proposed. This is based around the technique of allowing the user to configure a set of devices and displays so that the information if collected and displayed in a preferred way, using gestures as if the actual physical space is a VR (Virtual Reality) space. In a simple medical application example, a surgical room may be equipped with a surgical microscope and a vital monitor (shown in Fig. 2a). If the surgeon wants to display the vitals on the microscope screen, the surgeon can do that by dragging & dropping the vital monitor into the microscope screen (see Fig. 2a). Another medical example is when a user wants to send a video stream from a microscope or endoscope to the head-mounted digital viewer of a surgeon (see Fig. 2b). The interaction with the device ecosystem is very intuitive and fast and allows for a more agile adaptation of the ecosystem according to the dynamic shift of needs, as it is easy to add and remove devices when needed or not needed. It also enables more flexibility in the physical arrangement of devices in a room, as the user can collect all the data without the need to have optical access to each device.

Fig. 2a shows a schematic diagram of a user dragging information 215 from a vitals monitor 210 to a screen 220 of a surgical microscope system using a drag & drop gesture. On top of the display, the stereo cameras 170 for detection of the user pointing are shown. The user can easily use virtual drag & drop between devices to transfer the display of one device on the monitor as picture in picture.

Fig. 2b shows a schematic diagram of a user dragging information 225 from a screen 220 of a surgical microscope system to a surgeon's head-mounted viewer 230. The user can easily send a video stream from a screen to a surgeon's head mounted digital viewer.

To achieve this using the techniques illustrated in connection with Figs. 1a to 1d, the system 110 is configured to determine the position of the first point of reference 120 based on the position of the first point 12 on the body of a user 10 for a first point of time and a second point of time. The system 110 is configured to determine the position of the second point of reference 130 based on the position of the pointing indicator 16 used by the user for the first point of time and the second point of time. The system 110 is configured to determine a first device based on the first point of reference and the second point of reference for the first point of time and a second device based on the first point of reference and the second point of reference for the second point of time. The system 110 is configured to determine the response based on the determined first and second device, the act of determining the response comprising controlling the second device to display information 215, 225 (shown in Figs. 2a and 2b) provided by the first device.

The transfer of information from the first device to the second device is based on the user pointing at both devices. In general, it was found to be more intuitive to first point at the device containing the information and then at the device, on which the information is to be shown. Accordingly, the second point of time may be later than the first point of time. The user pointing at both devices may be part of an overarching gesture, which includes pointing sequentially at both devices (to indicate which of the devices is to act as a source and which of the devices is to act as display). Accordingly, the system may be configured to identify a pre-defined gesture being performed by the user, and to determine the first and second point in time based on the pre-defined hand-gesture. This pre-defined gesture may include pointing at the first device at the first point in time and pointing at the second device at the second point in time. In other words, the user first points at the first device, and then at the second device. However, these two pointing actions may be connected by the remainder of the gesture, to indicate that the user does not merely want to select one of the devices for gesture control. In addition to the user pointing at the first and the second device, the pre-defined gesture may also include a transition between both devices. For example, during the transition, the user may keep their arm outstretched, so that, instead of two separate pointing gestures, a single pointing gesture is performed that is merely moved towards the second device. Alternatively, a grab gesture may be used, i.e., the user may point at the first device, perform the grab gesture while pointing at the first device and keep performing the grab gesture until the user points at the second device, where the user releases the grab gesture. Fig. 2c shows a schematic diagram of an example grab gesture, in which the index finger and the thumb of the hand are moved towards each other. This gesture may be used for a drag & drop operation, such as the one performed in the present context. Accordingly, the pre-defined gesture may be a drag-and-drop gesture. The start and end of the grab gesture may also define the first and second points in time.

In an ideal implementation, all devices are digitally interconnected. In this case, the system 110 can obtain the information provided by the first device from the first device and control the second device to display the information obtained from the first device. In other words, the system may be configured to obtain the information provided by the first device from the first device. However, it might not be always possible to have all the devices connected. In that case, an alternative implementation is to use cameras to video capture the screen of a device, e.g., a vital monitor (see Fig. 2a), and then display that information on the screen of the second device (e.g., the microscope screen) without any digital connection between the microscope and the vitals monitor. In other words, the system may be configured to obtain imaging sensor data showing the information provided by the first device from a camera being separate from the first device, the imaging sensor data comprising the information provided by the first device. In this case, while the first device provides the information, the providing of the information merely refers to showing the information on a screen of the first device, i.e., the information is provided by showing the information on a screen of the first device, and not digitally via a network. Accordingly, the imaging sensor data may comprise a representation of information shown on a screen of the first device. To make this information usable, the imaging sensor data may be processed, and the relevant information may be extracted. For example, the system may be configured to extract the information by the first device from the imaging sensor data, by cropping the imaging sensor data and/or geometrically transforming the imaging sensor data (e.g., to perform perspective corrections). For example, the system may be configured to process the imaging sensor data to determine a portion of the imaging sensor data showing the information, and to crop and/or geometrically transform the imaging sensor data to extract the information.

The system is configured to control the second device to display information provided by the first device. For this purpose, the system may be configured to provide the information provided by the first device for displaying to the second device. For example, the system may be configured to provide a display signal for a display device of the second device, the display signal comprising a representation of the information provided by the first device. In this context, the display signal may be a signal for driving the display device of the second device, or it may be a video stream to be displayed by the second device, e.g., within a window or dedicated area on the display device of the second device. In other words, in the first option, the system drives the display device of the second device. For example, the system 110 may be part of the second device. This may be the case in the scenario shown in Figs. 1d and 2a, where the second device is a surgical imaging system 100 (such as a surgical microscope system or a surgical exoscope system). For example, some examples of the present disclosure relate to a surgical imaging system 100, comprising the system 110 and at least one of the first device and the second device. In the second option, the second device is merely interconnected and part of the same ecosystem as the system, with the second device accepting the display signal / video stream for displaying as part of the ecosystem.

As outlined in connection with Figs. 1a to 1d, multiple cameras may be placed at different positions and devices to ensure sufficient optical coverage in the whole room, e.g., for both determination of the first and second points of reference, and, optionally, also for providing imaging sensor data showing the screen of a device. For example, the system may be configured to process at least one of depth sensor data of a depth sensor 160, imaging sensor data of a camera sensor 150 and stereo imaging sensor data of a stereo camera 170 to determine at least one of the position of the first point of reference and the position of the second point of reference, and a position of one or more devices. In particular, the system may be configured to determine the positions of joints of a skeletal model of the body of the user by processing the respective sensor data, and to determine at least one of the position of the first point of reference and the position of the second point of reference based on the positions of the joints of the skeletal model. For example, each device could be equipped with cameras, and also security-like cameras could have better overview in the room. The cameras could be used collectively to ensure seamless operation.

More details and aspects of the concept for a contactless ecosystem of devices are mentioned in connection with the proposed concept or one or more examples described above or below (e.g., Fig. 1a to 1d, 3a to 5). The concept for a contactless ecosystem of devices may comprise one or more additional optional features corresponding to one or more aspects of the proposed concept, or one or more examples described above or below.

In the following, an example of contactless haptic (or tactile) feedback is given. Haptic feedback is valuable in medical devices like surgical microscopes because it enhances the surgeon's precision and control during delicate procedures. By providing real-time touch sensations, haptic feedback allows the surgeon to better gauge the applied force and spatial orientation, ultimately improving the accuracy and safety of the operation.

In the following, it is proposed to use contactless haptic feedback in contactless control of devices such as surgical microscopes.

For example, various technologies may be used to provide haptic feedback. For example, ultrasound-based haptic feedback may be used. By utilizing focused ultrasonic waves, this technology creates contactless haptic feedback through the generation of pressure points in mid-air, allowing users to feel tactile sensations without touching a physical surface. For example, Inami, M., Shinoda, H., & Makino, Y. (2018): "Haptoclone (Haptic-Optical Clone) for Mutual Tele-Environment" provide an example of ultrasound-based haptic feedback. As an alternative, laser-based haptic feedback may be used. Using laser-induced plasma, this method generates haptic feedback by creating a shockwave in the air, producing a touch sensation when interacting with the plasma. For example, Futami, R., Asai, Y., & Shinoda, H. (2019): "Hapbeat: Contactless haptic feedback with laser-induced plasma" shows the use of haptic feedback based on laser-induced plasma. Another technology generates air vortices. Controlled air vortices are to deliver targeted haptic feedback without physical contact, enabling users to experience a touch-like sensation from a distance. Sodhi, R., Poupyrev, I., Glisson, M., & Israr, A. (2013): "AIREAL: Interactive tactile experiences in free air" give an example of this technology. Another alternative is the user of electromagnetic haptic feedback: By manipulating magnetic fields, this technique generates contactless haptic feedback that can simulate various textures and sensations, allowing users to interact with virtual or remote objects in a more realistic manner. Wang, M., Zhang, X., & Zhang, D. (2014): "Magnetic Levitation Haptic Interface Based on Spherical Permanent Magnet" is an example of the application of this technology. Some of the above-referenced techniques may be used as part of wearable devices to provide contactless feedback. Innovations in wearable technology, such as smart gloves, utilize combinations of the aforementioned techniques to provide haptic feedback without direct skin contact, offering enhanced user experiences in virtual reality, gaming, and medical applications (see, for example, Kim, Y., Yoo, B., & Choi, S. (2018): "A Wearable Vibrotactile Haptic Device for Virtual Reality: Design and Implementation"). Another known technique is the use of vibration modules is mobile phones to provide haptic feedback that resembles pressing a physical button.

Contactless control is not widely used, and the combination of contactless control and haptic feedback is only discussed as a proof of concept. As a result, in the proof-of-concept studies, the design is still on a basic level, primarily aiming on merely simulating the haptic feedback of touching an object. However, contactless control in three-dimensional space allows a wide variety of use and implementation of haptic feedback, which is not known from the aforementioned proof-of-concept implementations. Moreover, contactless control of devices, such as a microscope, is still an unexplored space.

In the following, a concept is provided for improving the user experience of contactless control by adding contactless haptic feedback. In various examples of this concept, a 3D space map may be used that defines the type of feedback to be provided to the user by any type of contactless haptic creation technology such as ultrasound. Fig. 3a illustrates an example implementation of the concept using ultrasound emitters 190. In this implementation, a contactless control monitor is equipped with ultrasound emitters arranged perimetrically around the monitor frame. Fig. 3a shows a schematic drawing of a display device 180 with ultrasonic emitters 190. In the example of Fig. 3a, the ultrasound emitters 190 are arranged at a frame of the display device 180, surrounding a display area of the display device. When the user, shown by the first and second points of reference 120; 130 at the eyes of the user and the finger of the user uses contact-less control to control a virtual button 310 of the user interface, the ultrasound waves (shown as circles) focus at the finger 130 of the user.

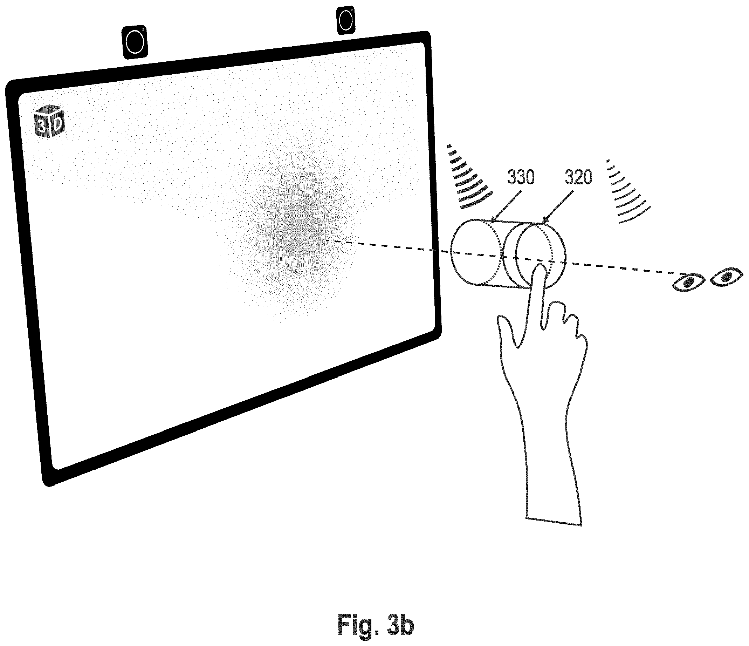

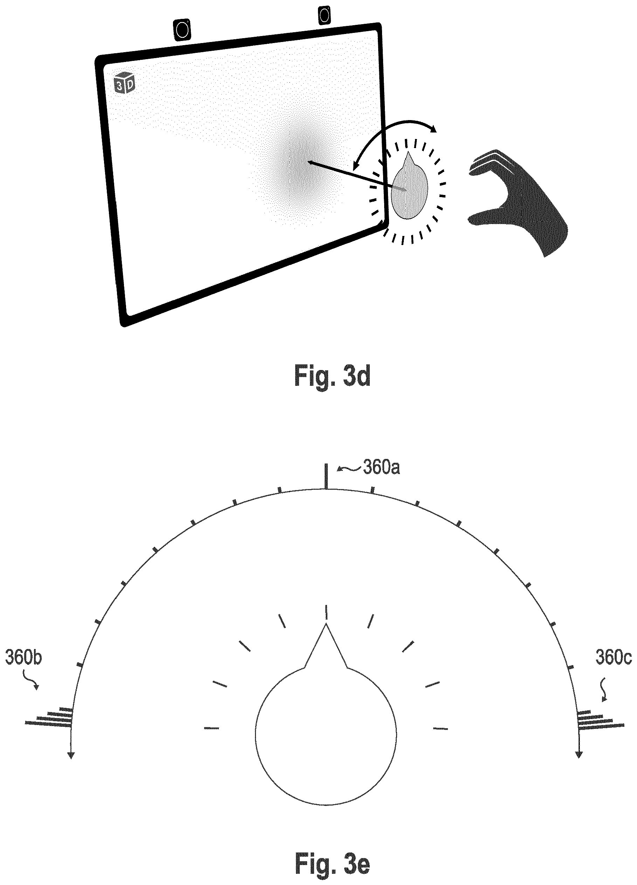

Fig. 3b shows a schematic drawing of haptic zones with different tactile feedback, and in particular the concept of zones of feedback. In Fig. 3b, 3D-zones are defined where the fingertip/hand will receive different type of haptic feedback. In this example the virtual button defines two zones: the "button stand-by zone" 320 (when the fingertip is aligned with the button) where a week haptic feedback informs the user that the fingertip is at a position that the user can press a virtual button (i.e., the finger is aligned with the button). The other zone is the "button activation zone" 330 (when the button is pressed) which provides feedback that the virtual button is pressed (akin to confirmation of a click).

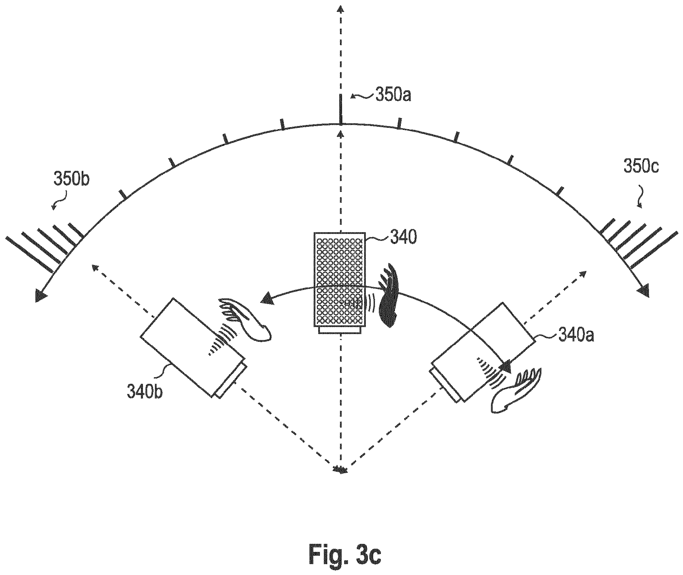

When controlling a device, such as a microscope, via gesture control, in particular alignment control is of great importance and value for the users (e.g., surgeons). However, the lack of feedback makes the contactless control counterintuitive, awkward in feeling, and as a result slows down the process. An important aspect of the use of contactless haptic feedback is to provide haptic feedback control a device and thus improve the experience and efficiency of the microscope control. Fig. 3c illustrates an example of haptic feedback in the contactless control of a microscope positioning. Fig. 3c shows a schematic drawing of haptic feedback while moving a microscope. Fig. 3c shows a microscope 340 (which is equipped with ultrasound emitters, shown as circles), which can be moved between two positions 340a; 340b, which may be considered virtual boundaries, and which define an angle adjustment range. While moving the orientation of the microscope, the microscope stays orientated towards a surgical cavity. In the example shown the user's hand moves near to the microscope and when enters a predefined distance, then the microscope locks and follows the user's hand. The haptic feedback serves a guide for the alignment and as confirmation of the user's actions. For this purpose, haptic confirmation 350a is given when the device is engaged, less pronounced haptic feedback (indicated by the short bars between the extreme positions and the middle position) is given during movement, and increasingly strong haptic feedback 350b, 350c is given as haptic warning indicating that the boundary is reached. In Figs. 3c and 3e, the intensity of the haptic feedback increases, the more the respective bars extend from the arrowed circle indicating the angle. A way to describe the concept of programming the haptic feedback is to define 3D boundaries and zones which define the type of haptic feedback. In this example the virtual boundaries 340a, 340b are derived by the microscope's physical limitations of adjustment range, i.e., the microscope arm cannot move beyond. Alternatively, the virtual boundaries could be determined by other limitations such as the alignment with the surgical cavity, i.e., the microscope is restricted within the angles that allow to look in the surgical cavity.

In addition to the 3D boundaries and zones described above, which are fixed in space, zones and boundaries positioned relative to the microscope's position can also be useful. For example, when the hand is used to virtually move and guide the microscope, there can be defined a "virtual grabbing zone" which is always around the microscope. This means that there is an area that when the hand is in then it can be recognized as a potential control guide. In that case it would be useful to provide haptic feedback as to if the user's hand is at correct spot.

Figs. 3d and 3e illustrate an example of haptic feedback designed for a specific type of control, in this case a rotation knob. Figs. 3d and 3e show schematic drawing of haptic feedback while operating a rotational user interface element via gesture control. The haptic feedback pattern shown in Fig. 3e, represents the feedback during the rotation of the virtual knob shown in Fig. 3d, and provides three message types: (i) That the end of the rotation range is being reached by offering a gradually increasing haptic intensity 360b, 360c near the range end (i.e., haptic feedback that the boundary is reached), (ii) confirmation of the rotation by providing discrete haptic clicks resembling a real rotation knob (the smaller bars between the extremes and the middle, and (iii) confirmation that the knob is at the zero position (i.e., haptic feedback 360a that the device is engaged). The haptic feedback is not restricted in the rotation feedback as shown in Figs. 3d and 3e but can also assist the user to align the hand and thus have more confident in the use of a control element, and consequently use the interface easier and faster. Examples of alignment feedback is to provide haptic confirmation (i) when the hand is aligned, and (ii) when the gesture is recognized, (iii) when the hand is getting misaligned during the use of the control element, and (iv) when the gesture is getting difficult to be recognized.

For example, the haptic feedback may be used to help the user transfer information between devices, as discussed in connection with Figs. 1a to 2c and 4. For example, the system 110 of the discussed figures may be configured to control an emitter of a contactless tactile feedback system, such as one or more ultrasound emitters, one or more laser emitters, one or more air emitters or one or more magnetic field emitters to provide tactile feedback in response to the user performing the pre-defined gesture (e.g., by giving tactile feedback when the pre-defined gesture is detected to start and when the pre-defined gesture is detected to end, and/or by giving tactile feedback when the first and second device are determined as part of the pre-defined gesture.

The example shown in Figs. 3d and 3e illustrates a rotating knob, but the same concept can be extended in other virtual control elements such as a sliding bar, and a switch. The goal of the haptic feedback in virtual controls is to resemble the experience of a physical control unit, so the user can have a natural, intuitive, and efficient utilization.

As a result of the contactless tactile feedback, the user may have a natural and intuitive experience. The confirmation may offer certainty to the user about whether the contactless control is activated or not. The intuitive and assertive experience may allow the user to use the virtual control faster and more efficiently. The confirmation may also reduce errors, i.e., false unintentional activation, misinterpretation of gestures, and activation failures.

More details and aspects of the contactless tactile feedback are mentioned in connection with the proposed concept, or one or more examples described above or below (e.g., Fig. 1a to 2c, 4 to 5). The contactless tactile feedback may comprise one or more additional optional features corresponding to one or more aspects of the proposed concept, or one or more examples described above or below.

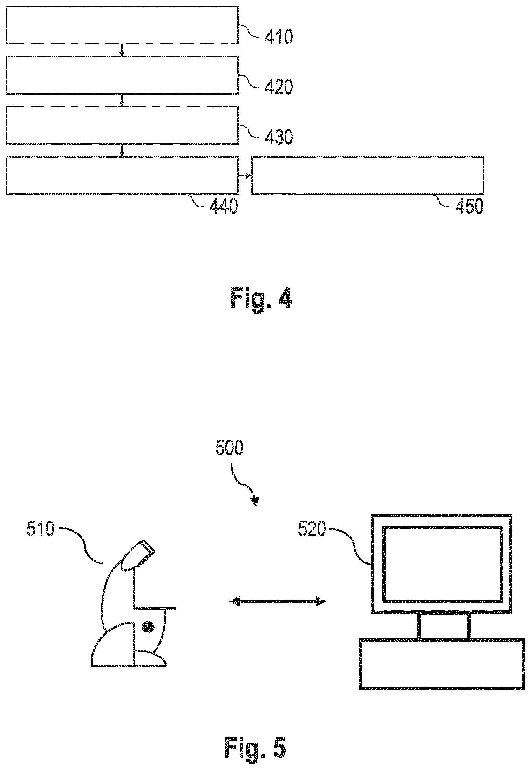

Fig. 4 shows a flow chart of an example of a method for controlling a user interface. The method comprises determining 410 a position of a first point of reference based on a position of a first point on the body of a user for a first point of time and a second point of time. The method comprises determining 420 a position of a second point of reference based on a position of a pointing indicator used by the user for the first point of time and the second point of time. The method comprises determining 430 a first device based on the first point of reference and the second point of reference for the first point of time and a second device based on the first point of reference and the second point of reference for the second point of time. The method comprises determining 440 a response based on the determined first and second device. The act of determining a response comprises controlling 450 the second device to display information provided by the first device.

For example, the method may be performed by a computer system, such as the system 110 discussed in connection with one or more of Figs. 1a to 3e, 5. Features introduced in connection with the system and optical imaging system of one of Figs. 1a to 3e, 5 may likewise be included in the corresponding method.

More details and aspects of the method are mentioned in connection with the proposed concept, or one or more examples described above or below (e.g., Fig. 1a to 3e, 5). The method may comprise one or more additional optional features corresponding to one or more aspects of the proposed concept, or one or more examples described above or below.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to an imaging device, such as a microscope or exoscope, comprising a system as described in connection with one or more of the Figs. 1a to 4. Alternatively, an imaging device, such as a microscope or exoscope, may be part of or connected to a system as described in connection with one or more of the Figs. 1a to 4. Fig. 5 shows a schematic illustration of a system 500 configured to perform a method described herein. The system 500 comprises an imaging device 510 (such as a microscope or exoscope) and a computer system 520. The imaging device 510 is configured to take images and is connected to the computer system 520. The computer system 520 is configured to execute at least a part of a method described herein. The computer system 520 may be configured to execute a machine learning algorithm. The computer system 520 and imaging device 510 may be separate entities but can also be integrated together in one common housing. The computer system 520 may be part of a central processing system of the imaging device 510 and/or the computer system 520 may be part of a subcomponent of the imaging device 510, such as a sensor, an actor, a camera, or an illumination unit, etc. of the imaging device 510.

The computer system 520 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 520 may comprise any circuit or combination of circuits. In one embodiment, the computer system 520 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 520 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 520 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 520 may also include a display device, one or more speakers, and a keyboard and/or controller, which can include a mouse, trackball, touch screen, voice-recognition device, or any other device that permits a system user to input information into and receive information from the computer system 520.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules.

Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

### List of reference Signs

- 10: User
- 12: Eye
- 16: Hand
- 16a: Finger
- 16b: Wrist
- 20: Base unit of surgical microscope system with haptic user interface
- 100: Surgical microscope system
- 110: System
- 120: First point of reference
- 130: Second point of reference
- 140: Imaginary line
- 150: Camera sensor
- 160: Depth sensor
- 170: Stereo sensor
- 180: Display device, screen
- 185: Projection device
- 190: Emitter
- 210: Vitals monitor
- 215: Information
- 220: Screen of surgical microscope system
- 225: Information
- 230: Head-mounted display
- 310: Virtual button
- 320: Button activation zone
- 330: Button stand-by zone
- 340: Microscope with ultrasound emitters
- 340a, 340b: Virtual boundaries for microscope
- 350a: Haptic confirmation that the device is engaged
- 350b, 350c: Haptic warning that the boundary is reached
- 360a: Haptic confirmation that the device is engaged
- 360b, 360c: Haptic warning that the boundary is reached
- 410: Determining a position of a first point of reference
- 420: Determining a position of a second point of reference
- 430: Determining a first and a second device
- 440: Determining a response
- 450: Controlling a second device to display information
- 500: System
- 510: Microscope/Imaging device
- 520: Computer system

## Claims

1. A system (110) for controlling a user interface (100), the system comprising one or more processors (114), wherein the system is configured to:
determine a position of a first point of reference (120) based on a position of a first point (12) on the body of a user (10) for a first point of time and a second point of time;
determine a position of a second point of reference (130) based on a position of a pointing indicator (16) used by the user for the first point of time and the second point of time;
determine a first device based on the first point of reference and the second point of reference for the first point of time and a second device based on the first point of reference and the second point of reference for the second point of time; and
determine a response based on the determined first and second device, the act of determining a response comprising controlling the second device to display information (215; 225) provided by the first device.

2. The system according to claim 1, wherein the second point of time is later than the first point of time.

3. The system according to one of the claims 1 or 2, wherein the system is configured to identify a pre-defined gesture being performed by the user, and to determine the first and second point in time based on the pre-defined hand-gesture.

4. The system according to claim 3, wherein the pre-defined gesture includes pointing at the first device at the first point in time and pointing at the second device at the second point in time.

5. The system according to one of the claims 3 or 4, wherein the pre-defined gesture is a drag-and-drop gesture.

6. The system according to one of the claims 1 to 5, wherein the system is configured to obtain the information provided by the first device from the first device.

7. The system according to one of the claims 1 to 5, wherein the system is configured to obtain imaging sensor data showing the information provided by the first device from a camera being separate from the first device, the imaging sensor data comprising the information provided by the first device.

8. The system according to claim 7, wherein the imaging sensor data comprises a representation of information shown on a screen of the first device.

9. The system according to one of the claims 7 or 8, wherein the system is configured to extract the information by the first device from the imaging sensor data, by cropping the imaging sensor data and/or geometrically transforming the imaging sensor data.

10. The system according to one of the claims 1 to 9, wherein the system is configured to provide a display signal for a display device of the second device, the display signal comprising a representation of the information provided by the first device.

11. The system according to one of the claims 1 to 10, wherein the system is configured to process at least one of depth sensor data of a depth sensor (160), imaging sensor data of a camera sensor (150) and stereo imaging sensor data of a stereo camera (170) to determine at least one of the position of the first point of reference and the position of the second point of reference, and a position of one or more devices.

12. The system according to claim 11, wherein the system is configured to determine the positions of joints of a skeletal model of the body of the user by processing the respective sensor data, and to determine at least one of the position of the first point of reference and the position of the second point of reference based on the positions of the joints of the skeletal model.

13. A surgical imaging system (100), comprising the system (110) according to one of the claims 1 to 12 and at least one of the first device and the second device.

14. A method for controlling a user interface, the method comprising:
determining (410) a position of a first point of reference (120) based on a position of a first point (12) on the body of a user (10) for a first point of time and a second point of time;
determining (420) a position of a second point of reference (130) based on a position of a pointing indicator (16) used by the user for the first point of time and the second point of time;
determining (430) a first device based on the first point of reference and the second point of reference for the first point of time and a second device based on the first point of reference and the second point of reference for the second point of time; and
determining (440) a response based on the determined first and second device, the act of determining a response comprising controlling (450) the second device to display information (215; 225) provided by the first device.

15. Computer program with a program code for performing the method according to claim 14 when the computer program is run on a processor.
